Europäisches Patentamt

(19) European Patent Office

Office européen des brevets

(11) Publication number: **0 154 673**

**B1**

(12) **EUROPEAN PATENT SPECIFICATION**

(45) Date of publication of patent specification: **14.11.90**

(21) Application number: **84109444.4**

(22) Date of filing: **08.08.84**

(51) Int. Cl.⁵: **F 04 C 18/14**

(30) Priority: **30.11.83 JP 224145/83**

(43) Date of publication of application:
**18.09.85 Bulletin 85/38**

(45) Publication of the grant of the patent:
**14.11.90 Bulletin 90/46**

(84) Designated Contracting States:
**BE DE FR GB IT NL SE**

(56) References cited:
**EP-A-0 077 031**
**DD-A- 98 730**
**DD-A- 112 299**
**GB-A-2 006 343**

(73) Proprietor: **HITACHI, LTD.**
**6, Kanda Surugadai 4-chome**
**Chiyoda-ku, Tokyo 100 (JP)**

(72) Inventor: **Mori, Hidetomo**
**195-2, Asahi-cho Tomobe-machi**
**Nishiibaraki-gun Ibaraki-ken (JP)**
Inventor: **Matsushita, Osami**
**1639-16, Taira-machi Tomobe-machi**
**Nishiibaraki-gun Ibaraki-ken (JP)**
Inventor: **Matsubara, Katsumi**
**1-132, Tagu Ushiku-machi**
**Inashiki-gun Ibaraki-ken (JP)**
Inventor: **Ida, Michiaki**
**2625-3, Shimoinayoshi Chiyoda-mura**
**Niihari-gun Ibaraki-ken (JP)**
Inventor: **Sasaki, Shigeru**
**193-15, Asahi-cho Tomobe-machi**
**Nishiibaraki-gun Ibaraki-ken (JP)**

(74) Representative: **Finck, Dieter et al**
**Patentanwälte v. Füner, Ebbinghaus, Finck**
**Mariahilfplatz 2 & 3**
**D-8000 München 90 (DE)**

(54) **Rotary fluid machine.**

Courier Press, Leamington Spa, England.

## Description

The invention relates to a rotary fluid machine comprising a casing provided with a rotor-housing space and inlet and outlet passages communicating with said space, and at least one rotor housed in said space and supported rotably on said casing by radial bearing means and thrust bearing means, wherein a gas entering said space through said inlet passage passes said rotor and is then discharged through said outlet passage; each of said thrust bearing means having inner races mounted securely on a shaft portion of said rotor and outer races fixed to said casing by a bearing mounting unit, having an axial rigidity at least as high as that of said thrust bearing means with respect to a thrust direction.

Such a rotary fluid machine, which is described in GB—A—2 006 343, which is the closest prior art, with means including an annular part which is pressed hydraulically or by springs against the outer races of the thrust bearing means to maintain the bearing fixed in the axial direction. The annular part is movable axially in the housing in a cylindrical bore. An end cover of the housing serves as a support for the springs. As the thrust bearings are biased by springs, the rigidity of the thrust bearing with respect to the movement of the rotor in the direction of counter thrust force is not sufficient. Increasing the spring force will increase the axial rigidity but it will also make the radial movement more difficult due to the friction between the outer race of the thrust bearing and the casing. Further the radial rigidity of the mounting unit cannot be predetermined as the calculation is difficult. Therefore the value of the natural frequency of the motor is not definite, and in addition, the value of the resonant frequency of the machine deviates considerably from one calculated in advance. So the rotary fluid machine operates with unknown natural frequencies of bending vibrations of its rotors. Therefore it is dangerous to operate a rotary fluid machine in this condition, since there is a very high possibility that resonance will occur. This resonance generates abnormal vibrations, reducing the life time of the bearing and eventually destroying the thrust bearing mounting unit.

It is an object of the invention to avoid these drawbacks and to provide a rotary fluid machine having a thrust bearing unit which bears substantially no radial loads.

This object is obtained in that said bearing mounting unit can move in radial direction and comprises a holder screw-connected to the casing and an axially extending portion having a radial rigidity of not more than half of the radial rigidity of said thrust bearing means, so that said thrust bearing means bears substantially no radial load.

With the bearing mounting unit according to the invention the thrust bearings which support a first load of the rotor bear substantially no radial load thereof. The mounting unit is capable of maintaining the natural frequencies of bending vibration of the rotors within a predetermined range, thereby preventing any dangerous operation of the machine.

With $K_B$ as the radial rigidity of the thrust bearings and $K_H$ as the radial rigidity of the bearing mounting unit, the total radial rigidity K the thrust bearings fixed to the casing by the bearing mounting unit can be determined by the following equation:

$$\frac{1}{K} = \frac{1}{K_B} + \frac{1}{K_H}$$

Therefore, when $K_H$ is $\frac{1}{2} K_B$, K is $\frac{1}{3} K_B$; and when $K_H$ is $\frac{1}{4} K_B$, K is $\frac{1}{5} K_B$. Consequently, in order to achieve the above objects, it is necessary that the radial rigidity of the bearing mounting unit is no more than half that of the thrust bearings.

Advantageously said holder is provided with a flange and a plurality of studs with which said holder is fixed to said casing, said studs being provided between said casing and said flange of said holder, seperated by equiangular distances from one another, and each of said studs having an axially extending smaller diameter portion which is formed such that the axial length thereof is greater than the thickness thereof.

Preferably each of said studs consists of a first screw portion, a smaller-diameter portion attached to said first screw portion, and a second screw portion; said first screw portion being driven into said casing; and a nut for fixing said flange to said stud being screwed onto said second screw poortion.

With a further embodiment said holder has a flange for the screw-connection with the casing and a plurality of first columnar portions which extend axially from said flange, so that end portions thereof are in contact with end surfaces of outer races in said thrust bearing means, and each of said first columnar portions being formed such that the axial length thereof is greater than the thickness thereof.

Consequently, the number of said first columnar portions is three.

For providing the same axial rigidity also with respect to the counter thrust direction a plurality of second-columnar portions is provided extending axially from an oil-feed ring; the outer races in said thrust bearing means being supported and held between said first and second columnar portions.

Preferably the number of said second columnar portions is three.

With another embodiment said axially extending portion is an annular piece interposed between a disc-shaped holder and the outer races of said thrust bearing means, said annular piece having characteristics such that the displacement thereof is small with respect to an axial force and large with respect to radial force.

Conveniently said annular piece consists of an elastic material with axially extending metal wires embedded therein.

With a further embodiment of the invention a housing is provided holding together the outer races of the thrust bearing means and in that the axially extending portion is a thin-walled flexible cylinder, formed such that one end thereof can be displaced in the radial direction but substantially not in the axial direction and fixed to the housing and the flange-shaped holder.

The invention is further explained by means of the drawings:

Fig. 1 is a section of a first embodiment of a rotary fluid machine taken along the plane including the axes of a pair of rotors;

Fig. 2 is the section II—II of Fig. 1;

Fig. 3 is the section III—III of Fig. 2;

Fig. 4 is an enlarged section through a thrust bearing portion of the first embodiment;

Fig. 5 is an enlarged section through a thrust bearing portion of a second embodiment of the machine;

Fig. 6 is the section VI—VI of Fig. 5;

Fig. 7 is an enlarged section through a thrust bearing portion of a third embodiment of the machine;

Fig. 8 is the section VIII—VIII of Fig. 7;

Fig. 9 is an enlarged section through a thrust bearing portion of a fourth embodiment of the machine;

Fig. 10 is the section X—X of Fig. 9;

Fig. 11 is the section XI—XI of Fig. 9;

Fig. 12 is an enlarged section through a thrust bearing portion of a fifth embodiment of the machine;

Fig. 13 is a graph of the relation between the force applied to an annular piece and the deformation thereof;

Fig. 14 is an enlarged section through a thrust bearing portion of a sixth embodiment of the machine; and

Fig. 15 is the section XV—XV of Fig. 14.

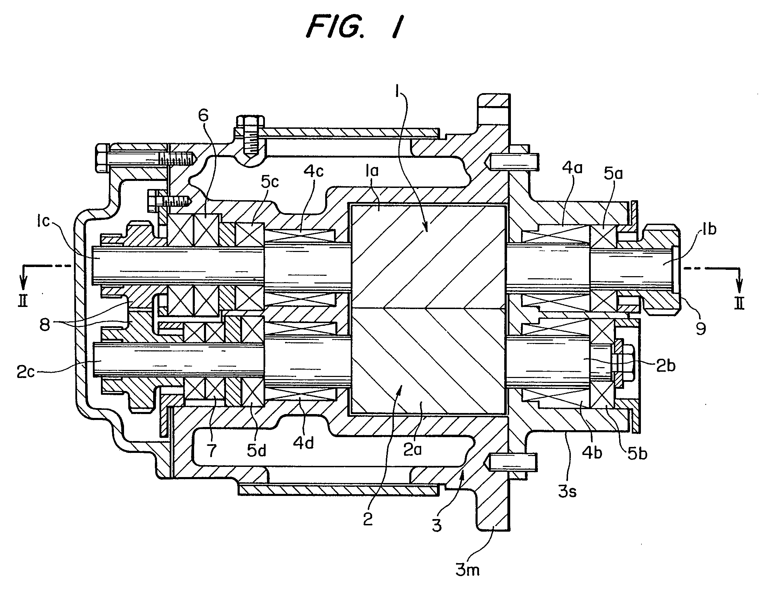

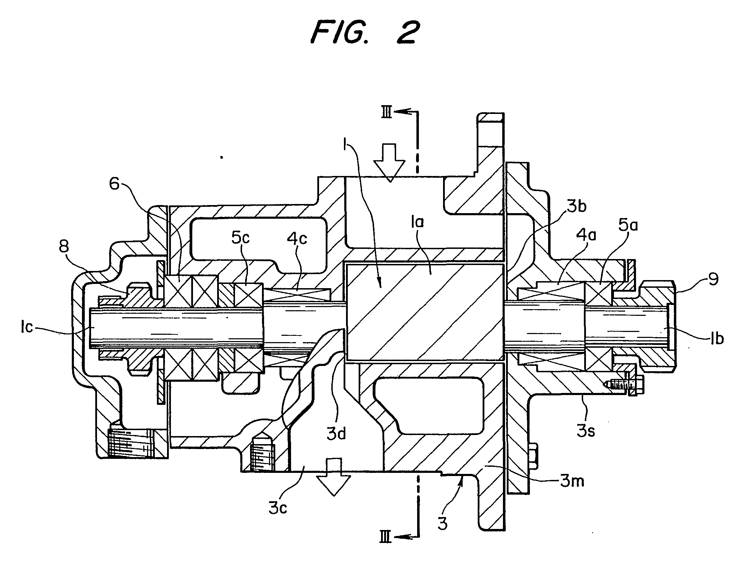

Figs. 1, 2, 3 and 4 show a first embodiment of the present invention which is applied to an oil-free screw compressor. The structure of the screw compressor as a whole will first be described.

A male rotor 1 consisting of a toothed portion 1a and shaft portions 1b, 1c, and a female rotor 2 consisting of a toothed portion 2a and shaft portions 2b, 2c mesh and are housed rotatably in a working space within a casing 3. The casing 3 consists of a main casing member 3m defining the working space, and a suction casing member 3s attached to an end surface of the main casing member 3m. The shaft portions 1b, 1c of the male rotor 1 and the shaft portions 2b, 2c of the female rotor 2 extend through the casing 3 and project out thereof. The sections of these shaft portions which pass through the walls of the casing are provided with shaft seal members 4a, 4b, 4c, 4d. The shaft seal members 4a, 4b, 4c, 4d are positioned close to the toothed portions 1a, 2a to seal a compressed gas (compressed air) (i.e., prevent the compressed gas leaking into the working space) and bearing lubricating oil, i.e., prevent the lubricating oil entering the working space.

The two rotors 1, 2 are supported on the casing 3 by radial loaded rolling bearings 5a, 5b, 5c, 5d and thrust loaded ball bearings 6, 7.

A pair of timing gears 8 are mounted on the shaft portions 1c, 2c of the male and female rotors 1, 2 so that the toothed portions 1a, 2a thereof can rotate in a contactless meshed state. A pinion 9 is mounted on the shaft portion 1b of the male rotor 1, and meshes with a driving gear (not shown).

When the male rotor 1 is driven by the pinion 9 at between 15,000—24,000 r.p.m. (50—120 m/sec), the rotors 1, 2 are rotated synchronously by the timing gears 8, with a narrow clearance kept between the rotors. As a result, gas is sucked onto the toothed portions 1a, 2a in the working space through a suction passage 3a and a suction port 3b. This gas is compressed to 8 kg/$cm^2$G and is discharged from a discharge port 3d into a discharge passage 3c.

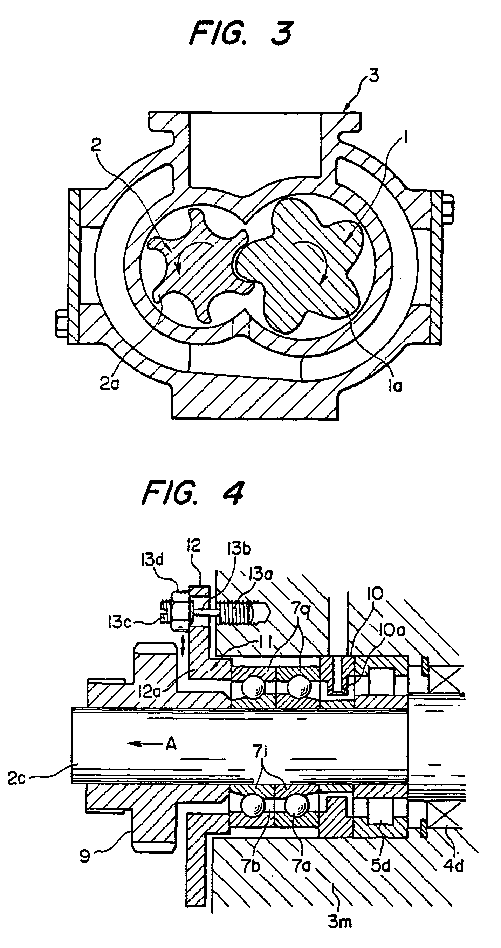

Details of a retainer unit for the thrust bearings 6, 7 will now be given, with reference to Fig. 4.

The thrust bearing 7 consists of a pair of angular-contact ball bearing members 7a, 7b which are provided between a ring 10 provided with an oil feed port 10a, and a mounting unit 11. Inner races 7i of the bearing members 7a, 7b, are fixed to the shaft portion 2c of the female rotor 2. Outer races 7q are supported and held between the ring 10 and the mounting unit 11. The mounting unit 11 consists of a holder 12 provided with a circular flange 12a, and three equiangularly-spaced studs 13 which fix the holder 12 to the main casing member 3m so that the holder 12 can move in the radial direction only, as shown by the double-headed arrow. Each of the studs 13 consists of a first screw portion 13a inserted into the casing member 3m, a smaller-diameter portion 13b, a second screw portion 13c onto which a nut is screwed, and a nut 13d. The axial length of the smaller-diameter portion 13b is greater than the thickness thereof. The smaller-diameter portion 13b is so formed that it bends when a radial force is applied to the free end of the study 13.

Each of the studs 13 has an axial rigidity equal to or greater than that of the thrust bearing 7, and a radial rigidity of at most half thereof.

When the thrust bearing 7 is mounted on the member 3m via spacers 15 with bolts 16, and the bearing 7 is held between the columnar portions 14b and a ring 10. The spacers 15, of a suitably-selected thickness, are used to prevent the bearing 7 being squeezed too forcibly when the bolts 16 are rightened, and prevent the columnar portions 14b buckling when the bearing is thus squeezed too forcibly.

Examples of dimensions and the properties of various parts of this embodiment will now be given. If the outer diameter of the thrust bearing 7 is 47 mm, the radial rigidity thereof is 58, $8 \times 10^6$ N/m, the radial rigidity of the mounting unit 11 is half that of the bearing 7, and the axial length of each of the columnar portions 14b is 8.5 mm, the length of one side of each columnar portion 14b is 3.3 mm.

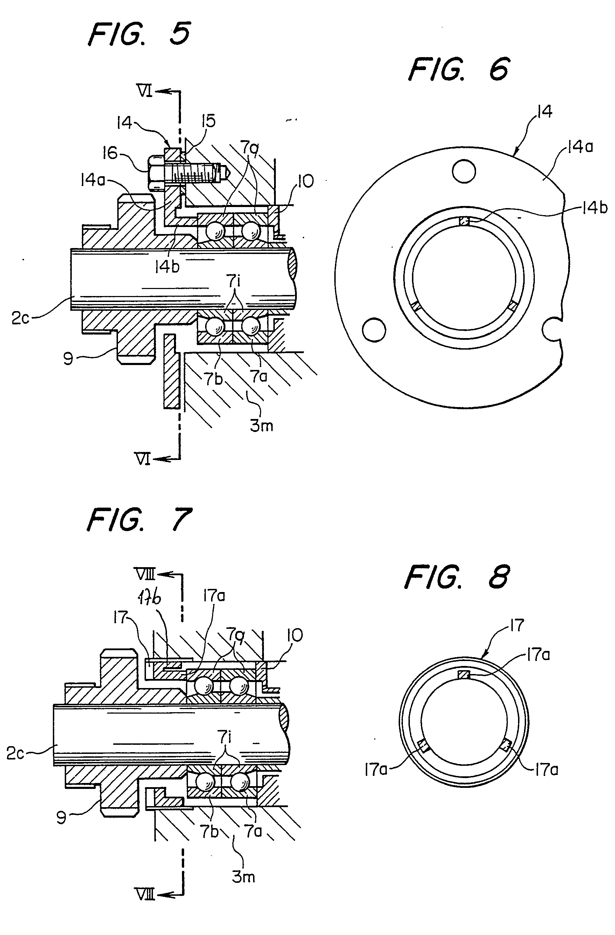

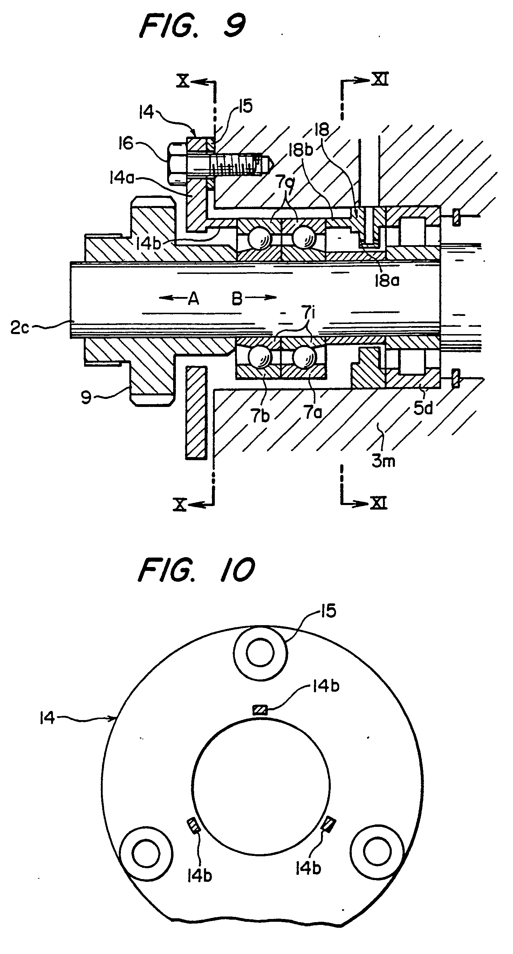

Figs. 7 and 8 show a third embodiment of the present invention.

This embodiment is so formed that a holder provided to columnar portions, similar to those of the second embodiment, is screwed to a casing member.

The holder 17 is provided with columnar portions 17a similar to the columnar portions 14b of the second embodiment, and a thread around the outer circumference thereof. The holder 17 is screwed into a thread formed in the casing member, so that the thrust bearing 7 is held between the columnar portions 17a and the ring 10.

Figs. 9, 10 and 11 show a fourth embodiment of the present invention.

This embodiment is a modification of the second embodiment and is provided with a mounting unit which has additional columnar portions, similar to those of the second embodiment, on the side of the ring 10 for the bearing 7. A ring 18 provided with an oil feed port 18a is provided with columnar portions 18b similar to the columnar portions 14b of the second embodiment, and the bearing 7 is held between the columnar portions 18b, 14b.

The construction of the other parts of the fourth embodiment is identical to that of the corresponding parts of the second embodiment (Figs. 5 and 6).

According to this embodiment, a bearing mounting unit can be obtained in which the thrust bearings bear substantially no radial load when a thrust force is applied in either of the directions of arrows A, B.

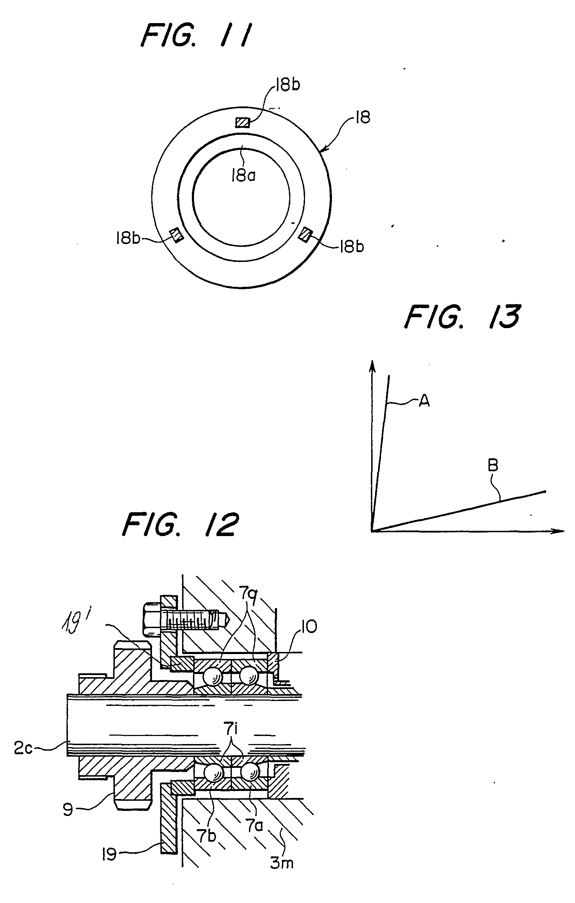

Fig. 12 shows a fifth embodiment of the present invention. In this embodiment, a bearing is held by a piece whose displacement has directional characteristics. Namely, an annular piece whose displacement has directional characteristics is interposed between a disc-shaped holder 19 and the outer races 7q of the bearing 7. The piece 19' has characteristics such that the displacement thereof is small with respect to an axial force A and large with respect to a radial force B, as shown in Fig. 13.

The piece with these characteristics consists of an elastic material with axially-extending metal wires embedded therein.

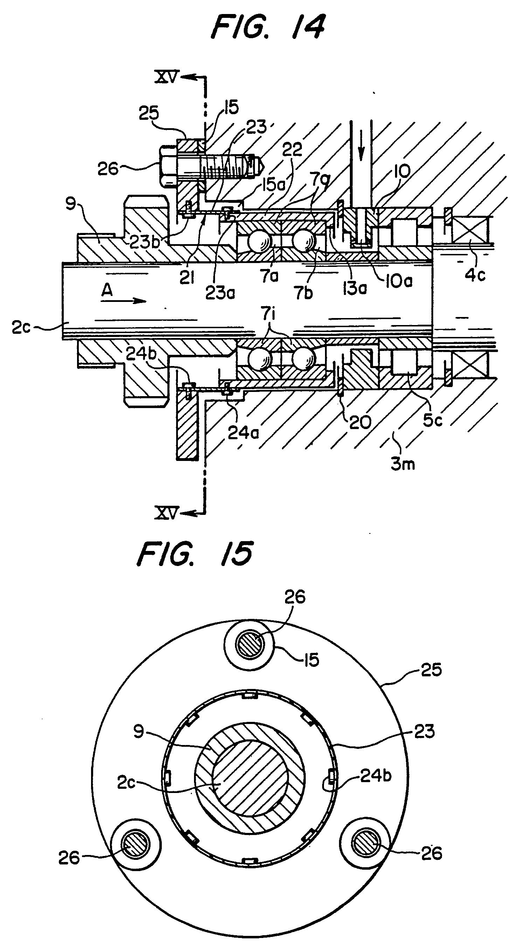

Figs. 14 and 15 show a sixth embodiment of the present invention.

A rolling thrust bearing 7 consists of a pair of angular-contact ball bearings 7a, 7b and is positioned close to the ring 10 which is provided with the oil feed bore 10a. The ring 10 and the radial bearing 5c are fixed to the casing member 3m by a snap ring 20. The inner races 7i of the bearings 7a, 7b are mounted securely on the shaft portion 2c of the female rotor and the outer races 7q are fixed to the casing member 3m by a bearing mounting unit. This mounting unit 21 consists of a housing 22 holding the two outer races 7q together in such a manner that the outer races 7q can be handled as a single part, a flexible cylinder 23 fixed at one end 23a thereof to the housing 22 by a plurality of bolts 24a, and a mounting plate 25 fixed to the other end 23b of the cylinder 23 by a plurality of bolts 24b, and to the casing member 3m over a spacer 15 by bolts 26. The right-hand end of the housing 22 is provided with a collar 13a which defines a reference surface for the axial position of the inner races 7i held therein, and which acts as a stopper for the axial movement of the outer races 7q. The outer races 7q are, of course, fitted firmly into the housing 22 so that they do not move while the machine is operating.

The cylinder 23 has a thin, cylindrical wall, and is so formed that one end 15a thereof can be displaced in the radial direction but substantially not in the axial direction. Clearances are provided between the outer surface of the housing 22 and the inner surface of the portion of the casing member 3m which holds the bearing, and between an axial end surface of the housing 22 and that of a snap-ring 20.

This embodiment is characterized in that it is provided with a housing 22 which holds the outer races of both of thrust bearings 7a, 7b. A combination of these characteristics with the bearing mounting unit of the first or second embodiment also constitutes an embodiment of the present invention.

These embodiments concern mounting units for the rolling thrust bearing 7 which supports the female rotor 2. The rolling thrust bearing 6 supporting the male rotor 1 can also be mounted on the casing member using the mounting units of these embodiments.

**Claims**

1. A rotary fluid-machine comprising a casing (3, 3m) provided with a rotor-housing space and inlet (3a) and outlet passages (3c) communicating with said space, and at least one rotor (1, 2) housed in said space and supported rotably on said casing (3) by radial bearing means (5a, b, c, d) and thrust bearing means (6, 7), wherein a gas entering said space through said inlet passage (3a) passes said rotor (1, 2) and is then discharged through said outlet passage (3c); each of said thrust bearing means (6, 7) having inner races (7i) mounted securely onto a shaft portion (1c, 2c) of said rotor (1, 2) and outer races (7q) fixed to said casing (3) by a bearing mounting unit having an axial rigidity at least as high as that of said thrust bearing means (6, 7) with respect to a thrust direction, characterized in that said bearing mounting unit can move in radial direction and comprises a holder (12, 14, 17, 19, 25) screw-connected to the casing (3, 3m) and an axially extending portion (13b, 14b, 17a, 19', 23) having a radial rigidity of not more than half of the radial rigidity of said thrust bearing means (6, 7), so that said thrust bearing means (6, 7) bears substantially no radial load.

2. The rotary fluid machine according to claim 1, characterized in that said holder (12) is provided with a flange (12a) and a plurality of studs (13) with which said holder (12) is fixed to said casing (3m), said studs (13) being provided between said casing (3m) and said flange (12a) of said holder (12), separated by equiangular distances from one another, and each of said studs (13) having an axially extending smaller diameter portion (13b) which is formed such that the axial length thereof is greater than the thickness thereof.

3. The rotary fluid machine according to claim 2, characterized in that each of said studs (13) consists of a first screw portion (13a), a smaller-diameter portion (13b) attached to said first screw portion (13a), and a second screw portion (13c); said first screw portion (13a) being driven into said casing (3m); and a nut (13d) for fixing said flange (14a) to said stud (13) being screwed onto said second screw portion (13c).

4. The rotary fluid machine according to claim 1, characterized in that said holder (14, 17) has a flange (14a, 17b) for the screw-connection with the casing (3m) and a plurality of first columnar portions (14b, 17a) which extend axially from said flange (14a), so that end portions thereof are in contact with end surfaces of outer races (7q) in said thrust bearing means (7), and each of said first columnar portions (14b, 17a) being formed such that the axial length thereof is greater than the thickness thereof.

5. The rotary fluid machine according to claim 4, characterized in that the number of said first columnar portions (14b, 17a) is three.

6. The rotary fluid machine according to claim 4 or 5, characterized by a plurality of second-columnar portions (18b) extending axially from an oil-feed ring (18); the outer races (7q) in said thrust bearing means (6, 7) being supported and held between said first and second columnar portions (14b 18b).

7. The rotary fluid machine according to claim 6, wherein the number of said second columnar portions (18b) is three.

8. The rotary fluid machine according to claim 1, characterized in that said axially extending portion is an annular piece (19') interposed between a disc-shaped holder (19) and the outer races (7q) of said thrust bearing means (6, 7), said annular piece (19') having characteristics such that the displacement thereof is small with respect to a radial force.

9. The rotary fluid machine according to claim 8, characterized in that said annular piece (19) consists of an elastic material with axially extending metal wires embedded therein.

10. The rotary fluid machine according to claim 1, characterized by a housing (22) holding together the outer races (7q) of the thrust bearing means (6, 7) and in that the axially extending portion is a thin-walled flexible cylinder (23), formed such that one end (15)'thereof can be displaced in the radial direction but substantially not in the axial direction and fixed to the housing (22) and the flange-shaped holder (25).

**Patentansprüche**

1. Rotationsströmungsmaschine mit einem Gehäuse (3, 3m), das mit einem Rotorgehäuseraum und Einlaß- (3a) und Auslaßkanälen (3c) versehen ist, die mit dem Raum in Verbindung stehen, und mit wengistens einem Rotor (1, 2), der in dem Raum aufgenommen und drehbar an dem Gehäuse (3) durch Radiallagereinrichtungen (5a, b, c, d) und Axiallagereinrichtungen (6, 7) gelagert ist, wobei ein in den Raum durch den Einlaßkanal (3a) eintretendes Gas den Rotor (1, 2) passiert und dann durch den Auslaßkanal (3c) gefördert wird, jedes der Axiallagereinrichtungen (6, 7), innere Laufringe (7i), die fest an einem Schaftabschnitt (1c, 2c) des Rotors (1, 2) angebracht sind und äußere Laufringe (7q) aufweist, die an dem Gehäuse (3) durch eine Lagerhalteeinheit festgelegt sind, die eine axiale Steifigkeit hat, die wenigstens so hoch wie die der Axiallagereinrichtungen (6, 7) bezogen auf eine Schubrichtung ist, dadurch gekennzeichnet, daß die Lager halteeinheit sich in Radialrichtung bewegen kann und einen Halter (12, 14, 17, 19, 25), der in Schraubverbindung mit dem Gehäuse (3, 3m) steht, und einen sich axial erstreckenden Abschnitt (13b, 14b, 17a, 19', 23) aufweist, der eine radiale Steifigkeit von nicht mehr als der Hälfte der radialen Steifigkeit der Axiallagereinrichtungen (6, 7) aufweist, so daß die Axiallagereinrichtungen (6, 7) im wesentlichen keine Radialbelastung tragen.

2. Rotationsströmungsmaschine nach Anspruch 1, dadurch gekennzeichnet, daß der Halter (12) mit einem Flansch (12a) und einer Vielzahl von Zapfen (13) versehen ist, mit denen der Halter (12) an dem Gehäuse (3m) festgelegt ist, wobie die Zapfen (13) zwischen dem Gehäuse (3m) und dem Flansch (12a) des Halters (12) getrennt durch gleiche Winkelabstände voneinander vorgesehen sind und jeder der Zapfen (13) einen sich axial erstreckenden Abschnitt (13b) mit kleinerem Druchmesser aufweist, der so ausgebildet ist, daß seine axiale Länge größer als seine Dicke ist.

3. Rotationsströmungsmaschine nach Anspruch 2, dadurch gekennzeichnet, daß jeder der Zapfen (13) aus einem ersten Schraubabschnitt (13a), einem Abschnitt (13b) mit kleinerem Durchmesser, der an dem ersten Schraubabschnitt (13a) befestigt ist, und einen zweiten Schraubabschnitt (13c) aufweist, wobei der erste Schraubabschnitt (13a) in das Gehäuse (3m) getrieben ist und eine Mutter (13d) zum Festlegen des Flansches (14a) an dem Zapfen (13) auf den zweiten Schraubabschnitt (13c) geschraubt ist.

4. Rotationsströmungsmaschine nach Anspruch 1, dadurch gekennzeichnet, daß der Halter (14, 17) einen Flansch (14a, 17b) für die Schraubverbindung mit dem Gehäuse (3m) und eine Vielzahl von ersten Säulenabschnitten (14b, 17a) aufweist, die sich axial von dem Flansch (14a) aus so erstrecken, daß ihre Endabschnitte in Kontakt mit den Stirnflächen der äußeren Laufflächen (7q) in den Axiallagereinrichtungen (7) stehen, wobei jeder der ersten Säulenabschnitte (14b, 17a) so ausgebildet ist, daß seine axiale Länge größer als seine Dicke ist.

5. Rotationsströmungsmaschine nach Anspruch 4, dadurch gekennzeichnet, daß die Anzahl der ersten Säulenabstände (14b, 17a) drei ist.

6. Rotationsströmungsmaschine nach Anspruch 4 oder 5, gekennzeichnet durch eine Vielzahl von zweiten Säulenabschnitten (18b), die sich axial von einem Ölzuführungsring (18) aus erstrecken, wobei die äußeren Laufringe (7q) in den Axiallagereinrichtungen (6, 7) zwischen den ersten und zweiten Säulenabschnitten (14b, 18b) abgestützt und gehalten sind.

7. Rotationsströmungsmaschine nach Anspruch 6, bei welcher die Anzahl der zweiten Säulenabschnitte (18b) drei ist.

8. Rotationsströmungsmaschine nach Anspruch 1, dadurch gekennzeichnet, daß der sich axial erstreckende Abschnitt ein ringförmiges Teil (19') ist, das zwischen einem scheibenförmigen Halter (19) und den äußeren Laufringen (7q) der Axiallagereinrichtungen (6, 7) angeordnet ist, wobei das ringförmige Teil (19') solche Eigenschaften hat, daß seine Verschiebung bezüglich einer axiallen Kraft gering und bezüglich einer radialen Kraft groß ist.

9. Rotationsströmungsmaschine nach Anspruch 8, dadurch gekennzeichnet, daß das ringförmige Teil (19) aus einem elastischen Material besteht, in welchem sich axial erstreckende Metalldrähte eingebettet sind.

10. Rotationsströmungsmaschine nach Anspruch 1, gekennzeichnet durch ein Gehäuse (22), welches die äußeren Laufringe (7q) der Axiallagereinrichtungen (6, 7) zusammenhält, und dadurch, daß der sich axial erstreckende Abschnitt ein dünnwandiger flexibler Zylinder (23) ist, der so ausgebildet ist, daß sein eines Ende (15) in der Radialrichtung verschoben weden kann, jedoch in der Axialrichtung im wesentlichen nicht, und daß er an dem Gehäuse (22) und an dem flanschförmigen Halter (25) festgelegt ist.

**Revendications**

1. Machine rotative volumétrique comportant un carter (3, 3m) équipé d'une chambre recevant un rotor et de passages d'admission (3a) et de sortie (3c) communiquant avec ladite chambre, et au moins un rotor (1, 2) logé dans ladite chambre et supporté à rotation sur ledit carter (3) par des moyens formant paliers radiaux (5a, b, c, d) et des moyens formant paliers de poussée (6, 7), dans laquelle un gaz pénétrant dans ladite chambre par l'intermédiaire dudit passage d'admission (3a) traverse ledit rotor (1, 2) et est ensuite évacué par l'intermédiaire dudit passage de sortie (3c), chacun desdits moyens formant paliers de poussée (6, 7) possédant des pistes intérieures (7i) fixées sur une partie d'arbre (1c, 2c) dudit rotor (1, 2) et des pistes extérieures (7q) fixées audit carter (3) par un support de palier possédant une rigidité axiale au moins aussi grande que celle desdits moyens formant paliers de poussée (6, 7) par rapport à une direction de poussée, caractérsiée en ce que ledit support de palier peut se déplacer radialement et comporte une monture (12, 14, 17, 19, 25) vissée au carter (3, 3m) et une partie d'étendant axialement (13b, 14b, 17a, 19', 23) possédant une rigidité axiale non supérieure à la moitié de la rigidité axiale desdits moyens formant paliers de pousée (6, 7), de sorte que lesdits moyens formant paliers de poussée (6, 7) ne subissent pratiquement aucune charge radiale.

2. Machine rotative volumétrique selon la revendication 1, caractérisée en ce que ladite monture (12) est munie d'un bride (12a) et d'une pluralité de goujons (13) par lesquels ladite monture (12) est fixée audit carter (3m), lesdits goujons (13) étant prévus entre ledit carter (3m) et ladite bride (12a) de ladite monture (12) uniformément répartis angulairement entre eux, et chacun desdits goujons (13) possédant und partie de plus petit diamètre (13b) s'étendant axialement, qui est façonnée de telle sorte que sa longueur axiale soit supérieure à son épaisseur.

3. Machine rotative volumétrique selon la revendication 2, caractérisée en ce que chacun desdits goujons (13) est constitué d'une première partie filetée (13a), d'une partie à diamètre plus petit (13b) rattachée à ladite première partie filetée (13a), et d'une seconde partie filetée (13c); ladite première partie filetée (13a) étant engagée dans ledit carter (3m); et un écrou (13d) pour fixer ladite bride (14a) audit goujon (13) étant vissé sur ladite seconde partie filetée (13c).

4. Machine rotative volumétrique selon la revendication 1, caractérisée en ce que ladite monture (14, 17) possède une bride (14a, 17b) pour le vissage sur le carter (3m) et une pluralité de premières parties sous forme de colonnes (14b, 17a) qui s'étendent axialement depuis ladite bride (14a), de sorte que des parties terminales de celles-ci sont en contact de surfaces terminales de pistes extérieures (7q) dans lesdits moyens formant paliers poussée (7), et chacune desdites premières parties sous forme de colonnes (14b, 17a) étant façonnée de telle sorte que sa longueur axiale soit supérieure à son épaisseur.

5. Machine rotative volumétrique selon la revendication 4, caractérisée en ce que le nombre desdites premières parties sous forme de colonnes (14b, 17a) est de trois.

6. Machine rotative volumétrique selon la revendication 4 ou 5, caractérisée par une pluralité de secondes parties sous forme de colonnes (18b) s'étendant axialement depuis une bague d'alimentation en huile (18); les pistes extérieures (7q) dans lesdits moyens formant paliers de poussée (6, 7) étant supportées et maintenues entre lesdites premières et secondes parties sous forme de colonnes (14b, 18b).

7. Machine rotative volumétrique selon la revendication 6, dans laquelle le nombre desdites secondes parties sous forme de colonnes (18b) est de trois.

8. Machine rotative volumétrique selon la revendication 1, caractérisée en ce que ladite partie s'étendant axialement est une pièce annulaire (19') interposée entre une monture (19) en forme de disque et les pistes extérieures (7q) desdits moyens formant paliers de poussée (6, 7), ladite pièce annulaire (19') possédant des caractéristiques telles que son déplacement est faible par rapport à une force axiale et important par rapport à une force radiale.

9. Machine rotative volumétrique selon la revendication 8, caractérisée en ce que ladite pièce annulaire (19) est constituée en un matériau élastique avec des fils métalliques s'étendant axialement noyés à l'intérieur.

10. Machine rotative volumétrique selon la revendication 1, caractérisée par un carter (22) maintenant ensemble les pistes extérieures (7q) des moyens formant paliers de poussée (6, 7) et en ce que la partie s'étendant aixalement est un cylindre flexible (23) à paroi mince, façonné de telle sorte qu'une de ses extrémités (15) peut être déplacée radialement, mais pratiquement axialement et fixé au carter (22) et à la monture (25) en forme de bride.

# FIG. I

# FIG. 2

# FIG. 3

# FIG. 4

## FIG. 5

## FIG. 6

## FIG. 7

## FIG. 8

## FIG. 9

## FIG. 10

*FIG. 11*

18b

18a

18

18b

18b

*FIG. 13*

A

B

*FIG. 12*

7q

19'

10

2c

7i

9

7b

7a

19

3m

6

## FIG. 14

## FIG. 15